# EUROPEAN PATENT APPLICATION

(11) **EP 4 768 455 A1**
(43) Date of publication of application: **01.07.2026**
(21) Application number: 25227360.2
(22) Date of filing: 29.12.2025
(51) Int. Cl.: C03C 3/32, C03C 4/10

(54) **CHALCOGENIDE GLASS AND OPTICAL ELEMENT**

(30) Priority: 26.12.2024 JP 2024230388; 21.08.2025 JP 2025138491
(71) Applicant: HOYA CORPORATION, Shinjuku-ku Tokyo 160-8347 (JP); Hoya Optical Technology (Weihai) Co., Ltd., Weihei, ShanDong (CN)
(72) Inventor: Watanabe, Yoshiharu, Tokyo, 160-8347 (JP); Nakatsuka, Yutaro, Tokyo, 160-8347 (JP); Negishi, Tomoaki, Tokyo, 160-8347 (JP)
(74) Representative: Schaumburg und Partner Patentanwälte mbB

(57) **Abstract**

A chalcogenide glass includes Ga in an amount of 2.0 to 40.0% by mass; Sb in an amount of 20.0 to 75.0% by mass; S in an amount of 15.0 to 40.0% by mass; Na, K, Rb, and Cs in a total amount R [Na + K + Rb + Cs] of 0.05% by mass or more; and C1, Br, and I in a total amount X [C1 + Br + I] of 0.01% by mass or less.

## Description

### TECHNICAL FIELD

The present invention relates to a chalcogenide glass and an optical element.

### BACKGROUND OF THE INVENTION

In recent years, technologies or products that utilize infrared light have been attracting attention. For example, there is increasing demand for security devices and authentication devices that use infrared cameras, infrared sensors, or the like, and far-infrared imaging is also expected to be used in automotive night vision systems. Optical elements that transmit infrared light are used in infrared cameras, infrared sensors or the like. Such optical elements are required to have superior infrared transmittance and furthermore, superior productivity so as to be able to meet the growing demand in recent years.

As materials used for optical elements that transmit infrared light, conventionally, crystalline materials such as germanium, silicon, zinc sulfide, and selenium sulfide have been used. However, these crystalline materials have poor processability, and therefore, are difficult to process into complex shapes such as aspherical lenses. In contrast, a chalcogenide glass that contains chalcogen elements as a main component has been proposed as an infrared-transmitting material having superior processability.

Patent Document 1 discloses, as the chalcogenide glass, an infrared-transmitting glass suitable for precision glass molding.

Patent Document 1: WO 2016/159289 A

### SUMMARY OF THE INVENTION

Reference 1 (Journal of Optoelectronics and Advanced Materials, Vol. 9, No. 12, December 2007, pp. 3751-3755) discloses that glasses containing cesium halides such as CsCl have poor water resistance. Therefore, it can be inferred that, among the glasses disclosed in Patent Document 1, glasses containing both Cs (cesium) and a halogen have poor water resistance. Furthermore, there is a risk that such glasses containing a halogen may corrode a melting vessel made of quartz glass or the like during production, or production equipment if molten glass or volatile substances leak out and it can be inferred that the productivity is poor.

Further, as a result of extensive studies, the present inventors have found that thermal stability of chalcogenide glass can be improved by introducing an alkali metal without adding a halogen that may impair water resistance and productivity. Patent Document 1 discloses a glass containing both a halogen and an alkali metal, but does not propose a glass in which the amount of a halogen is sufficiently reduced and which contains an alkali metal, and the thermal stability of such a glass has not been verified. In the case of the glass having poor thermal stability, problems arise such as difficulty in molding the glass in a molten state and in press molding such as reheat press molding or precision glass molding.

Therefore, an object of the present invention is to provide a chalcogenide glass exhibiting superior thermal stability and an optical element formed from said glass.

The concept of the present invention is as follows.
(1) A chalcogenide glass includes Ga in an amount of 2.0 to 40.0% by mass; Sb in an amount of 20.0 to 75.0% by mass; S in an amount of 15.0 to 40.0% by mass; Na, K, Rb, and Cs in a total amount R [Na + K + Rb + Cs] of 0.05% by mass or more; and Cl, Br, and I of in a total amount X [Cl + Br + I] of 0.01% by mass or less.
(2) A chalcogenide glass includes Ga in an amount of 0.5 to 30.0% by mass; Ge in an amount of 5.0% by mass or less; S in an amount of 15.0 to 40.0% by mass; Na, K, Rb, and Cs in a total amount R [Na + K + Rb + Cs] of 0.05% by mass or more; and Cl, Br, and I of in a total amount X [Cl + Br + I] of 0.01% by mass or less.
(3) An optical element includes the chalcogenide glass according to (1) or (2) above.

According to the present invention, the chalcogenide glass and the optical element that have superior thermal stability can be provided.

### BRIEF DESCRIPTION OF THE DRAWINGS

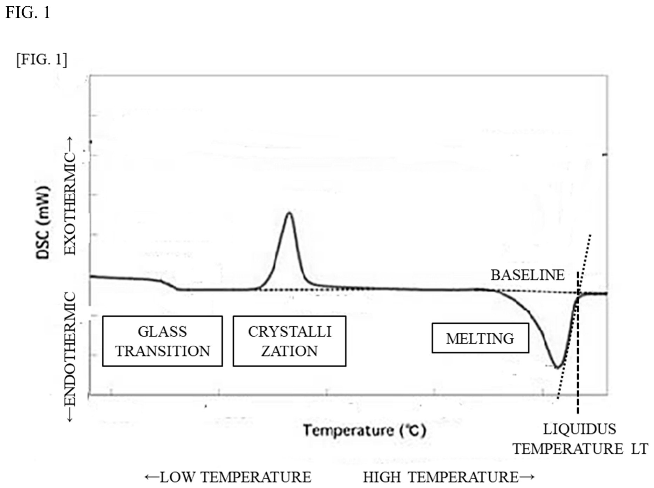

FIG. 1 is a diagram schematically showing a differential scanning calorimetry curve (DSC curve).

### DETAILED DESCRIPTION OF THE PREFERRED EMBODIMENTS

In this specification, the amount of glass components can be identified and quantified by known methods, for example, inductively coupled plasma atomic emission spectroscopy (ICP-AES), atomic absorption spectroscopy (AAS), inductively coupled plasma mass spectrometry (ICP-MS), ion chromatography, non-dispersive infrared spectroscopy (ND-IR), and the like.

In this specification, the glass components are expressed in % by mass. The term % by mass refers to the mass percentage of each element when the total amount of all elements included in the glass is taken as 100%. The amount and total amount of the glass components are, unless otherwise specified, based on mass percentage, and "%" means "% by mass". In addition, the amount of a constituent component being 0.00% means that the constituent component is substantially not contained, and the component is permitted to be contained at an inevitable impurity level.

In this specification, the glass having superior thermal stability means that during the molding process, the glass in a molten or softened state solidifies with minimal crystallization. Specifically, the glass having superior thermal stability means a lower liquidus temperature LT and a larger difference between a crystallization peak temperature Tc and a glass transition temperature Tg. As the liquidus temperature LT of the glass is lower, the viscosity at liquidus temperature becomes higher, and therefore, the glass can be easily obtained without crystallization. Moreover, a large difference between the crystallization peak temperature Tc and the glass transition temperature Tg widens the temperature range for press molding can be performed without crystallization. In addition, water resistance means that the transmittance of the glass is unlikely to decrease even when the glass is exposed to water.

Hereinafter, a chalcogenide glass according to the present invention will be described with reference to a first embodiment and a second embodiment

### First embodiment

The chalcogenide glass according to the first embodiment includes Ga in an amount of 2.0 to 40.0%, Sb in an amount of 20.0 to 75.0%, S in an amount of 15.0 to 40.0%, Na, K, Rb, and Cs in a total amount R [Na + K + Rb + Cs] of 0.05% or more, and Cl, Br, and I in a total amount X [Cl + Br + I] of 0.01% or less.

In the chalcogenide glass according to the first embodiment, the amount of Ga is 2.0 to 40.0%. The lower limit of the amount of Ga is preferably 2.2%, and more preferably 2.4%, 2.6%, 2.8%, 3.0%, 3.2%, 3.4%, 3.6%, 3.8%, 4.0%, 4.2%, 4.4%, 4.6%, 4.8%, 5.0%, 5.1%, 5.2%, 5.3%, 5.4%, 5.5%, 5.6%, 5.7%, 5.8%, and 5.9% in that order. In addition, the upper limit of the amount of Ga is preferably 38.0%, and more preferably 36.0%, 34.0%, 32.0%, 30.0%, 29.0%, 28.0%, 27.0%, 26.0%, 25.0%, 24.0%, 23.0%, 22.0%, 21.0%, 20.0%, 19.0%, and 18.0% in that order.

Ga is a network-forming component of the glass; in addition, Ga is an expensive raw material. By setting the amount of Ga within the above-described range, the thermal stability of the glass can be improved, and an increase in raw material cost can be suppressed. Meanwhile, if the amount of Ga is too low, the thermal stability of the glass may decrease; in addition, the glass may not be molded. If the amount of Ga is too high, that the absorption edge on the long-wavelength side may shift toward shorter wavelengths thereby narrowing the wavelength range of light transmitted through the glass; in addition, the viscosity at liquidus temperature may decrease; furthermore, the raw material cost may increase significantly.

In the chalcogenide glass according to the first embodiment, the amount of Sb is 20.0 to 75.0%. The lower limit of the amount of Sb is preferably 21.0%, and more preferably 22.0%, 23.0%, 24.0%, 25.0%, 26.0%, 27.0%, 28.0%, 29.0%, 30.0%, 31.0%, 32.0%, 33.0%, 34.0%, 35.0%, 36.0%, 37.0%, 38.0%, 39.0%, and 40.0% in that order. In addition, the upper limit of the amount of Sb is preferably 74.0%, and more preferably 73.0%, 72.0%, 71.0%, 70.0%, 69.0%, 68.0%, 67.0%, 66.0%, 65.0%, 64.0%, 63.0%, 62.0%, and 61.0% in that order.

Sb is a network-forming component of the glass. By setting the amount of Sb within the above-described range, the thermal stability of the glass can be improved. Meanwhile, if the amount of Sb is too low, the thermal stability of the glass may decrease; in addition, the glass may not be molded.

In the chalcogenide glass according to the first embodiment, the amount of S is 15.0 to 40.0%. The lower limit of the amount of S is preferably 16.0%, and more preferably 17.0%, 18.0%, 19.0%, 20.0%, 21.0%, 22.0%, 23.0%, 24.0%, and 25.0% in that order. In addition, the upper limit of the amount of S is preferably 39.0%, and more preferably 38.0%, 37.0%, 36.0%, 35.0%, 34.0%, 33.0%, 32.0%, and 31.0% in that order.

By setting the amount of S within the above-described range, the thermal stability of the glass can be improved. Meanwhile, if the amount of S is too low, the absorption edge on the short-wavelength side may shift toward longer wavelengths and the absorption edge on the long-wavelength side may shift toward shorter wavelengths, thereby narrowing the wavelength range of light transmitted through the glass, and the thermal stability of the glass may decrease, thereby making the glass non-moldable.

In the chalcogenide glass according to the first embodiment, the total amount R [Na + K + Rb + Cs] of Na, K, Rb, and Cs is 0.05% or more. The lower limit of the total amount R is preferably 0.06%, and more preferably 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, and 3.00% in that order. In addition, the upper limit of the total amount R is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, and 20.0% in that order.

Alkali metals such as Na, K, Rb, and Cs are components that function to lower the liquidus temperature LT. By setting the total amount R within the above-described range, the liquidus temperature LT can be lowered and the viscosity at liquidus temperature can be increased, thereby improving the moldability. In addition, the thermal stability of the glass can be improved; furthermore, the absorption edge on the short-wavelength side can be shifted toward shorter wavelengths, thereby widening the wavelength range of light transmitted through the glass. If the total amount R is too high, the thermal stability may decrease, and the glass may not be obtained. In addition, if the total amount R is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the first embodiment, the total amount X [Cl + Br + I] of Cl + Br + I is 0.01% or less. The upper limit of the total amount X is preferably 0.009%, and more preferably 0.008%, 0.007%, 0.006%, 0.005%, 0.004%, 0.003%, 0.002%, and 0.001% in that order. It is preferable that Cl, Br, and I is substantially not contained.

Halogen elements such as Cl, Br, and I are components that shift the short-wavelength absorption edge toward shorter wavelengths but deteriorate the water resistance of the glass. In addition, a melting vessel made of quartz glass or the like may be eroded during production, or the production equipment may be corroded if molten glass or volatile substances leak out, and the productivity may decrease. By setting the total amount X within the above-described range, the deterioration of the water resistance of the glass can be suppressed, and the desired productivity can be obtained.

In the chalcogenide glass according to the first embodiment, the upper limit of the amount of Ge is preferably 2.0%, and more preferably 1.8%, 1.6%, 1.4%, 1.2%, 1.0%, 0.8%, 0.6%, 0.5%, 0.4%, 0.3%, 0.2%, and 0.1% in that order. In addition, the lower limit of the amount of Ge is preferably 0.0%.

Ge is a network-forming component of the glass. From the viewpoint of improving the thermal stability of the glass, it is preferable that the amount of Ge is set within the above-described range. Meanwhile, if the amount of Ge is too high, the absorption edge on the long-wavelength side may shift toward shorter wavelengths, thereby narrowing the wavelength range of light transmitted through the glass; in addition, since Ge is very expensive, the raw material cost may increase significantly.

Non-limiting examples of the amounts and ratios of glass components other than those described above in the chalcogenide glass according to the first embodiment are shown below.

In the chalcogenide glass according to the first embodiment, the lower limit of the amount of Na is preferably 0.00%, and more preferably 0.05%, 0.06%, 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, and 0.95% in that order. In addition, the upper limit of the amount of Na is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, 20.0%, 19.0%, 18.0%, 17.0%, 16.0%, 15.0%, 14.0%, 13.0%, 12.0%, 11.0%, 10.0%, 9.0%, 8.0%, 7.0%, 6.0%, 5.0%, 4.0%, and 3.0% in that order.

Na is a component that functions to lower the liquidus temperature LT. From the viewpoint of improving moldability by lowering the liquidus temperature LT and increasing the viscosity at liquidus temperature, and from the viewpoint of improving the thermal stability of the glass and furthermore, shifting the absorption edge on the short-wavelength side toward shorter wavelengths, it is preferable that the amount of Na is set within the above-described range. If the amount of Na is too high, the thermal stability may decrease, and the glass may not be obtained. If the amount of Na is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the first embodiment, the lower limit of the amount of K is preferably 0.00%, and more preferably 0.05%, 0.06%, 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, and 0.95% in that order. In addition, the upper limit of the amount of K is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, 20.0%, 19.0%, 18.0%, 17.0%, 16.0%, 15.0%, 14.0%, 13.0%, 12.0%, 11.0%, 10.0%, 9.0%, 8.0%, 7.0%, 6.0%, 5.0%, and 4.0% in that order.

K is a component that functions to lower the liquidus temperature LT. From the viewpoint of improving moldability by lowering the liquidus temperature LT and increasing the viscosity at liquidus temperature, and from the viewpoint of improving the thermal stability of the glass and furthermore, shifting the absorption edge on the short-wavelength side toward shorter wavelengths, it is preferable that the amount of K is set within the above-described range. If the amount of K is too high, the thermal stability may decrease, and the glass may not be obtained. If the amount of K is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the first embodiment, the lower limit of the amount of Rb is preferably 0.00%, and more preferably 0.05%, 0.06%, 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, and 0.95% in that order. In addition, the upper limit of the amount of Rb is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, 20.0%, 19.0%, 18.0%, 17.0%, 16.0%, 15.0%, 14.0%, 13.0%, 12.0%, 11.0%, and 10.0% in that order.

Rb is a component that functions to lower the liquidus temperature LT. From the viewpoint of improving moldability by lowering the liquidus temperature LT and increasing the viscosity at liquidus temperature, and from the viewpoint of improving the thermal stability of the glass and furthermore, shifting the absorption edge on the short-wavelength side toward shorter wavelengths, it is preferable that the amount of Rb is set within the above-described range. If the amount of Rb is too high, the thermal stability may decrease, and that the glass may not be obtained. If the amount of Rb is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the first embodiment, the lower limit of the amount of Cs is preferably 0.00%, and more preferably 0.05%, 0.06%, 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, and 2.00% in that order. In addition, the upper limit of the amount of Cs is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, 20.0%, 19.0%, and 18.0% in that order.

Cs is a component that functions to lower the liquidus temperature LT. From the viewpoint of improving moldability by lowering the liquidus temperature LT and increasing the viscosity at liquidus temperature, and from the viewpoint of improving the thermal stability of the glass and furthermore, shifting the absorption edge on the short-wavelength side toward shorter wavelengths, it is preferable that the amount of Cs is set within the above-described range. If the amount of Cs is too high, the thermal stability may decrease, and the glass may not be obtained. If the amount of Cs is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the first embodiment, the upper limit of the amount of each of In, Bi, and Te is preferably 30.0%, and more preferably 25.0%, 20.0%, 15.0%, 10.0%, and 5.0% in that order. In addition, the lower limit of the amount of each of In, Bi, and Te is preferably 0.0%. In, Bi, and Te are components that improve the thermal stability of the glass. From the viewpoint of improving the thermal stability of the glass, it is preferable that the amount of each of In, Bi, and Te is set within the above-described range.

In the chalcogenide glass according to the first embodiment, the upper limit of the amount of Sn is preferably 30.0%, and more preferably 28.0%, 26.0%, 24.0%, 22.0%, 20.0%, 18.0%, 16.0%, 14.0%, 12.0%, 10.0%, 9.0%, 8.0%, 7.0%, 6.0%, 5.0%, 4.0%, 3.0%, and 2.0% in that order. In addition, the lower limit of the amount of Sn is preferably 0.0%. Sn is a component that improves the thermal stability of the glass. From the viewpoint of improving the thermal stability of the glass, it is preferable that the amount of Sn is set within the above-described range.

In the chalcogenide glass according to the first embodiment, the upper limit of the amount of Li is preferably 5.0%, and more preferably 4.0%, 3.0%, 2.0%, 1.0%, and 0.5% in that order. In addition, the lower limit of the amount of Li is preferably 0.0%. If the amount of Li is too high, the thermal stability may decrease and the glass may not be obtained. Therefore, it is preferable that the amount of Li is set within the above-described range.

In the chalcogenide glass according to the first embodiment, the upper limit of the amount of Zn is preferably 10.0%, and more preferably 9.0%, 8.0%, 7.0%, 6.0%, 5.0%, 4.0%, 3.0%, 2.0%, and 1.0% in that order. In addition, the lower limit of the amount of Zn is preferably 0.0%. If the amount of Zn is too high, the thermal stability may decrease and the glass may not be obtained. Therefore, it is preferable that the amount of Zn is set within the above-described range.

In the chalcogenide glass according to the first embodiment, the upper limit of the amount of La is preferably 30.0%, and more preferably 25.0%, 20.0%, 15.0%, 10.0%, 9.0%, 8.0%, 7.0%, 6.0%, 5.0%, 4.0%, 3.0%, 2.0%, and 1.0% in that order. In addition, the lower limit of the amount of La is preferably 0.0%. La functions to shift the absorption edge on the short-wavelength side toward shorter-wavelengths and improve thermal stability. Meanwhile, if the amount of La is too high, the thermal stability may decrease and the glass may not be obtained. Therefore, it is preferable that the amount of La is set within the above-described range.

In the chalcogenide glass according to the first embodiment, the upper limit of the amount of Cu is preferably 10.0%, and more preferably 9.0%, 8.0%, 7.0%, 6.0%, 5.0%, 4.0%, 3.0%, 2.0%, and 1.0% in that order. In addition, the lower limit of the amount of Cu is preferably 0.0%. If the amount of Cu is too high, the thermal stability may decrease and the glass may not be obtained. Therefore, it is preferable that the amount of Cu is set within the above-described range.

In the chalcogenide glass according to the first embodiment, the upper limit of the amount of Ca is preferably 10.0%, and more preferably 9.0%, 8.0%, 7.0%, 6.0%, 5.0%, 4.0%, 3.0%, 2.0%, and 1.0% in that order. In addition, the lower limit of the amount of Ca is preferably 0.0%. If the amount of Ca is too high, the thermal stability may decrease and the glass may not be obtained. Therefore, it is preferable that the amount of Ca is set within the above-described range.

In the chalcogenide glass according to the first embodiment, the upper limit of the amount of Sr is preferably 15.0%, and more preferably 14.0%, 13.0%, 12.0%, 11.0%, 10.0%, 9.0%, 8.0%, 7.0%, 6.0%, 5.0%, 4.0%, 3.0%, 2.0%, and 1.0% in that order. In addition, the lower limit of the amount of Sr is preferably 0.0%. If the amount of Sr is too high, the thermal stability may decrease and the glass may not be obtained. Therefore, it is preferable that the amount of Sr is set within the above-described range.

In the chalcogenide glass according to the first embodiment, the upper limit of the amount of Ba is preferably 15.0%, and more preferably 14.0%, 13.0%, 12.0%, 11.0%, 10.0%, 9.0%, 8.0%, 7.0%, 6.0%, 5.0%, 4.0%, 3.0%, 2.0%, and 1.0% in that order. In addition, the lower limit of the amount of Ba is preferably 0.0%. If the amount of Ba is too high, the thermal stability may decrease and the glass may not be obtained. Therefore, it is preferable that the amount of Ba is set within the above-described range.

In the chalcogenide glass according to the first embodiment, the upper limit of the amount of Ti is preferably 1.0%, and more preferably 0.9%, 0.8%, 0.7%, 0.6%, 0.5%, 0.4%, 0.3%, 0.2%, and 0.1% in that order. In addition, the lower limit of the amount of Ti is preferably 0.0%. Ti functions to prevent oxygen from bonding with other elements by bonding with oxygen in the glass. Meanwhile, when the amount of Ti is high, the glass may not be obtained. Therefore, it is preferable that the amount of Ti is set within the above-described range.

In the chalcogenide glass according to the first embodiment, the upper limit of the amount of Si is preferably 1.0%, and more preferably 0.9%, 0.8%, 0.7%, 0.6%, 0.5%, 0.4%, 0.3%, 0.2%, and 0.1% in that order. In addition, the lower limit of the amount of Si is preferably 0.0%. Si functions to prevent oxygen from bonding with other elements by bonding with oxygen in the glass. However, Si-O bond shows a strong absorption peak in the wavelength range of light transmitted through the chalcogenide glass. Therefore, it is preferable that the amount of Si is set within the above-described range.

In the chalcogenide glass according to the first embodiment, the upper limit of the amount of C is preferably 5.0%, and more preferably 4.5%, 4.0%, 3.5%, 3.0%, 2.5%, 2.0%, 1.5%, 1.0%, 0.9%, 0.8%, 0.7%, 0.6%, 0.5%, 0.4%, 0.3%, 0.2%, and 0.1% in that order. In addition, the lower limit of the amount of C is preferably 0.0%. C functions to prevent oxygen from bonding with other elements by bonding with oxygen in the glass. However, if the amount of C is too high, the absorption edge on the short-wavelength side may shift toward the longer wavelengths or the absorption edge on the long-wavelength side may shift toward shorter wavelengths, and the maximum transmittance may decrease. Therefore, it is preferable that the amount of C is set within the above-described range.

In the chalcogenide glass according to the first embodiment, the upper limit of the amount of Al is preferably 1.0%, and more preferably 0.9%, 0.8%, 0.7%, 0.6%, 0.5%, 0.4%, 0.3%, 0.2%, and 0.1% in that order. In addition, the lower limit of the amount of Al is preferably 0.0%. Al functions to prevent oxygen from bonding with other elements by bonding with oxygen in the glass. Meanwhile, if the amount of Al is high, the glass may not be obtained. Therefore, it is preferable that the amount of Al is set within the above-described range.

In the chalcogenide glass according to the first embodiment, the upper limit of the amount of Ag is preferably 20.0%, and more preferably 15.0%, 10.0%, and 5.0% in that order. In addition, the lower limit of the amount of Ag is preferably 0.0%. From the viewpoint of suppressing a significant increase in raw material cost, it is preferable that the amount of Ag is set within the above-described range.

In the chalcogenide glass according to the first embodiment, the upper limit of the amount of Gd is preferably 20.0%, and more preferably 15.0%, 10.0%, and 5.0% in that order. In addition, the lower limit of the amount of Gd is preferably 0.0%. From the viewpoint of suppressing a significant increase in raw material cost, it is preferable that the amount of Gd is set within the above-described range.

In the chalcogenide glass according to the first embodiment, the upper limit of the amount of Y is preferably 20.0%, and more preferably 15.0%, 10.0%, and 5.0% in that order. In addition, the lower limit of the amount of Y is preferably 0.0%. If the amount of Y is too high, the thermal stability may decrease and the glass may not be obtained. Therefore, it is preferable that the amount of Y is set within the above-described range.

In the chalcogenide glass according to the first embodiment, the upper limit of the amount of Cr is preferably 20.0%, and more preferably 15.0%, 10.0%, and 5.0% in that order. In addition, the lower limit of the amount of Cr is preferably 0.0%. If the amount of Cr is too high, the thermal stability may decrease and the glass may not be obtained. Therefore, it is preferable that the amount of Cr is set within the above-described range.

In the chalcogenide glass according to the first embodiment, the upper limit of the amount of Mn is preferably 20.0%, and more preferably 15.0%, 10.0%, and 5.0% in that order. In addition, the lower limit of the amount of Mn is preferably 0.0%. If the amount of Mn is too high, the thermal stability may decrease and the glass may not be obtained. Therefore, it is preferable that the amount of Mn is set within the above-described range.

It is preferable that the chalcogenide glass according to the first embodiment is mainly composed of the above-described glass components, that is, Ga, Sb, S, Na, K, Rb, Cs, Ge, In, Sn, Bi, Te, Zn, La, Cu, Ca, Sr, Ba, Ti, Al, Ag, Gd, Y, Cr, and Mn. The total amount of the above-described glass components is preferably 95% or more, more preferably 98% or more, more preferably 99% or more, and particularly preferably 99.5% or more.

It is preferable that the chalcogenide glass according to the first embodiment is essentially composed of the above-described glass components; however, the chalcogenide glass can also include other components to the extent that the other components do not impair the actions and effects of the present invention. In addition, in the present invention, the inclusion of inevitable impurities is not excluded.

### (Glass properties)

### <Optical transmittance>

The chalcogenide glass according to the first embodiment has superior transmittance for light in the wavelength range of 0.4 to 14 µm. Specifically, the shortest transmission wavelength is preferably 1.0 µm or less, and more preferably 0.9 µm or less and 0.8 µm or less in that order. In addition, the longest transmission wavelength is preferably 11.0 µm or more, and more preferably 11.5 µm or more, 12.0 µm or more, and 12.5 µm or more in that order. As used herein the term "the shortest transmission wavelength" is defined as the wavelength at which the transmittance reaches half of its maximum value, as determined for a glass sample having a thickness of 1.5 mm using ultraviolet-visible-near infrared spectroscopy (UV-Vis-NIR). As used herein the term "the longest transmission wavelength" is the wavelength at which the transmittance reaches half of its maximum transmittance, as determined for a glass sample having a thickness of 1.5 mm using Fourier transform infrared spectroscopy (FT-IR).

### <Glass transition temperature Tg>

In the chalcogenide glass according to the first embodiment, the lower limit of the glass transition temperature Tg is preferably 150°C, and more preferably 160°C, 170°C, 180°C, 185°C, 190°C, 195°C, 200°C, 205°C, 210°C, 215°C, and 220°C in that order. In addition, the upper limit of the glass transition temperature Tg is preferably 500°C, and more preferably 490°C, 480°C, 470°C, 460°C, 450°C, 440°C, 430°C, 420°C, 410°C, 400°C, 390°C, 380°C, 370°C, 360°C, 350°C, 340°C, 330°C, 320°C, 310°C, 300°C, and 290°C in that order.

### <Crystallization peak temperature Tc>

In the chalcogenide glass according to the first embodiment, the lower limit of the crystallization peak temperature Tc is preferably 300°C, and more preferably 310°C and 320°C in that order.

The chalcogenide glass according to the first embodiment also includes glass that does not exhibit the crystallization peak temperature Tc since no crystallization occurs even when heated up to 500°C. Such glass in which no crystallization peak is observed even when heated up to 500°C has the superior thermal stability, superior press moldability, and superior productivity.

### <Thermal stability>

In the chalcogenide glass according to the first embodiment, the thermal stability during press molding can be expressed as the difference [Tc - Tg] between the crystallization peak temperature Tc and the glass transition temperature Tg. In the press molding, the glass needs to be heated to a temperature equal to or higher than the glass transition temperature Tg in order to soften the glass. Meanwhile, it is preferable that the glass is softened at a temperature as low as possible below the crystallization peak temperature Tc such that the glass does not crystallize. That is, the greater the difference between the crystallization peak temperature Tc and the glass transition temperature Tg is, the wider the temperature range in which the glass can be softened without crystallization is widened. Further, by increasing the difference between the crystallization peak temperature Tc and the glass transition temperature Tg, the viscosity range of the glass in which the glass can be press-molded without the formation of crystals during softening can be widened. Therefore, it is easy to obtain suitable press molding conditions exhibiting superior productivity. In this regard, for example, Patent Document 2 (JP 6808543 B2) describes that when [Tc - Tg] is high, crystallization can be sufficiently suppressed during precision glass molding, whereas when [Tc - Tg] is low, there is a possibility that crystallization may proceed during precision glass molding. In addition, Patent Document 1 states that a large [Tc - Tg] means that the thermal stability of the glass is high and the moldability is good. That is, these documents also describe that the larger [Tc - Tg] is, the better the thermal stability is.

In the chalcogenide glass according to the first embodiment, the difference [Tc - Tg] between the crystallization peak temperature Tc and the glass transition temperature Tg is preferably 100°C or more, and more preferably 102°C or more, 104°C or more, 106°C or more, 108°C or more, 110°C or more, 112°C or more, 114°C or more, 116°C or more, 118°C or more, 120°C or more, 122°C or more, 124°C or more, 126°C or more, and 128°C or more in that order. From the viewpoint of stably press-molding the glass, it is preferable that the difference [Tc - Tg] between the crystallization peak temperature Tc and the glass transition temperature Tg is set within the above-described range.

As described above, the chalcogenide glass according to the first embodiment also includes glass with no crystal is observed even when heated up to 500°C, that is, glass in which the crystallization peak temperature Tc cannot be measured even when heated up to 500°C. It can be said that such glass has a wide temperature range in which press molding can be stably performed without crystallization and has superior thermal stability.

### <Liquidus temperature LT>

In the chalcogenide glass according to the first embodiment, the upper limit of the liquidus temperature LT is preferably 700°C, and more preferably 690°C, 680°C, 670°C, 660°C, 650°C, 640°C, 630°C, 620°C, 610°C, 600°C, 590°C, 580°C, 570°C, 560°C, and 550°C in that order. By setting the liquidus temperature LT within the above-mentioned range, the glass having superior thermal stability can be obtained. In addition, by setting the liquidus temperature LT of the glass within the above-described range, the viscosity at liquidus temperature increases, so that the glass can be easily obtained from the melt without crystallization.

The "liquidus temperature LT" in the present invention and this specification is determined by the following method.

When a glass sample is heated up to 500 to 600°C at a heating rate of 10°C/min in a nitrogen atmosphere using a differential scanning calorimeter, while flowing nitrogen at a flow rate of 50 mL/min, the endpoint of an endothermic peak that appears when crystals formed in the glass during the heating process melt in a temperature range higher than the glass transition temperature Tg or the crystallization peak temperature Tc is defined as the liquidus temperature LT. FIG. 1 is a diagram schematically showing a differential scanning calorimetry curve (DSC curve). The horizontal axis represents temperature with higher temperatures on the right and lower temperatures on the left. The vertical axis corresponds to the exothermic and endothermic behavior of the sample, with the region above a baseline (dotted line) indicating exothermic behavior and the region below the baseline indicating endothermic behavior. The crystallization during the heating process corresponds to an exothermic peak, and the melting of crystals formed during heating corresponds to an endothermic peak. The temperature at which all the crystals melt to form a molten liquid is the liquidus temperature LT. The liquidus temperature LT is determined as the temperature at the intersection of the tangent to the high temperature side of the endothermic peak and the baseline.

In cases where the liquidus temperature LT is outside the measurement range of the differential scanning calorimeter, the lowest temperature at which no crystals form when a sample, prepared by vacuum-sealing the glass in a quartz ampoule, heating it up to a predetermined temperature in an electric furnace, holding the glass at that temperature for two hours, then removing and rapidly cooling the vacuum-sealed glass, is observed under a microscope or the like can be referred to as the liquidus temperature LT.

### (Manufacture of glass)

A method for manufacturing the chalcogenide glass according to the first embodiment is not particularly limited; however, for example, the chalcogenide glass can be manufactured by vacuum-sealing a predetermined amount of raw materials in a quartz ampoule and melting the contents through heat treatment such that a target glass composition can be obtained. Alternatively, for example, the chalcogenide glass can be obtained by charging a predetermined amount of raw materials into a crucible made of quartz, carbon, or alumina, and melting the raw materials by heating in an inert gas and/or reducing gas atmosphere containing sulfur gas such that a target glass composition can be obtained. During melting process, it is preferable that the heat treatment is performed at a heating temperature of 500 to 1000°C, and it is more preferable that the heat treatment is performed at a heating temperature of 700 to 950°C. The heat treatment temperature and time may be any temperature and time that allow the contents to be sufficiently melted.

The raw materials are not particularly limited; however, elements, sulfides, or other compounds of each glass component can be used. Since the chalcogenide glass according to the first embodiment includes Cl, Br, and I in the total amount X [Cl + Br + I] of 0.01% by mass or less, it is preferable that raw materials including Cl, Br, and I as main components are not used.

### (Manufacture of optical element)

The chalcogenide glass according to the first embodiment is a glass having superior thermal stability and suitable for press molding. During press molding, the glass is molded into a desired shape by heating the glass to a temperature equal to or higher than the glass transition temperature Tg to achieve a desired softened state, and for example, pressing the glass sandwiched between an upper and a lower mold.

The optical elements that can be produced by press molding, particularly by precision glass molding, are not particularly limited; however, the examples thereof include aspherical lenses, lens arrays, microlens arrays, diffraction gratings, and the like that are required to have infrared-transmitting properties. These optical elements are useful as optical elements used in infrared cameras or various sensors that use infrared light.

### Second embodiment

The chalcogenide glass according to the second embodiment includes Ga in an amount of 0.5 to 30.0%, Ge in an amount of 5.0% or less, S in an amount of 15.0 to 40.0%, Na, K, Rb, and Cs in a total amount R [Na + K + Rb + Cs] of 0.05% or more, and Cl, Br, and I in a total amount X [Cl + Br + I] of 0.01% or less.

In the chalcogenide glass according to the second embodiment, the amount of Ga is 0.5 to 30.0%. The lower limit of the amount of Ga is preferably 0.6%, and more preferably 0.7%, 0.8%, 0.9%, 1.0%, 1.1%, 1.2%, 1.3%, 1.4%, 1.5%, 1.6%, 1.7%, 1.8%, 1.9%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.1%, 5.2%, 5.3%, 5.4%, 5.5%, 5.6%, 5.7%, 5.8%, and 5.9% in that order. In addition, the upper limit of the amount of Ga is preferably 29.0%, and more preferably 28.0%, 27.0%, 26.0%, 25.0%, 24.0%, 23.0%, 22.0%, 21.0%, 20.0%, 19.0%, 18.0%, and 17.0% in that order.

Ga is a network-forming component of the glass; in addition, Ga is an expensive raw material. By setting the amount of Ga within the above-described range, the thermal stability of the glass can be improved, and an increase in raw material cost can be suppressed. Meanwhile, if the amount of Ga is too low, the thermal stability of the glass may decrease; in addition, the glass may not be molded. If the amount of Ga is too high, the absorption edge on the long-wavelength side may shift toward shorter wavelengths, thereby narrowing the wavelength range of light transmitted through the glass; in addition, the viscosity at liquidus temperature may decrease; furthermore, the raw material cost may increase significantly.

In the chalcogenide glass according to the second embodiment, the amount of Ge is 5.0% or less. The upper limit of the amount of Ge is preferably 4.8%, and more preferably 4.6%, 4.4%, 4.2%, 4.0%, 3.8%, 3.6%, 3.4%, 3.2%, 3.0%, 2.8%, 2.6%, 2.4%, 2.3%, 2.2%, 2.0%, 1.8%, 1.6%, 1.4%, 1.2%, and 1.0% in that order. In addition, the lower limit of the amount of Ge is preferably 0.0%.

Ge is a network-forming component of the glass. The thermal stability of the glass can be improved by setting the amount of Ge within the above-described range. Meanwhile, if the amount of Ge is too high, the absorption edge on the long-wavelength side may shift toward shorter wavelengths, thereby narrowing the wavelength range of light transmitted through the glass; in addition, since Ge is very expensive, the raw material cost may increase significantly.

In the chalcogenide glass according to the second embodiment, the amount of S is 15.0 to 40.0%. The lower limit of the amount of S is preferably 16.0%, and more preferably 17.0%, 18.0%, 19.0%, 20.0%, 21.0%, 22.0%, 23.0%, 24.0%, and 25.0% in that order. In addition, the upper limit of the amount of S is preferably 39.0%, and more preferably 38.0%, 37.0%, 36.0%, 35.0%, 34.0%, 33.0%, 32.0%, and 31.0% in that order.

By setting the amount of S within the above-described range, the thermal stability of the glass can be improved. Meanwhile, if the amount of S is too low, the absorption edge on the short-wavelength side may shift toward longer wavelengths and the absorption edge on the long-wavelength side may shift toward shorter wavelengths, thereby narrowing the wavelength range of light transmitted through the glass, and the thermal stability of the glass may decrease, thereby making the glass non-moldable.

In the chalcogenide glass according to the second embodiment, the total amount R [Na + K + Rb + Cs] of Na, K, Rb, and Cs is 0.05% or more. The lower limit of the total amount R is preferably 0.06%, and more preferably 0.08%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, and 3.00% in that order. In addition, the upper limit of the total amount R is preferably 35.0%, and more preferably 34.0%, 33.0%, 32.0%, 31.0%, 30.0%, 29.0%, 28.0%, 27.0%, 26.0%, 25.0%, 24.0%, 23.0%, 22.0%, 21.0%, and 20.0% in that order.

Alkali metals such as Na, K, Rb, and Cs are components that function to lower the liquidus temperature LT. By setting the total amount R within the above-described range, the liquidus temperature LT can be lowered and the viscosity at liquidus temperature can be increased, thereby improving the moldability. In addition, the thermal stability of the glass can be improved; furthermore, the absorption edge on the short-wavelength side can be shifted toward shorter wavelengths, thereby widening the wavelength range of light transmitted through the glass. If the total amount R is too high, the thermal stability may decrease, and the glass may not be obtained. In addition, if the total amount R is too low, the liquidus temperature LT may not be sufficiently lowered, and the increase in the viscosity at liquidus temperature may not be sufficient, as the result of which the desired thermal stability may not be obtained and the desired moldability may not be obtained.

In the chalcogenide glass according to the second embodiment, the total amount X [Cl + Br + I] of Cl, Br, and I is 0.01% or less. The upper limit of the total amount X is preferably 0.009%, and more preferably 0.008%, 0.007%, 0.006%, 0.005%, 0.004%, 0.003%, 0.002%, and 0.001% in that order. It is preferable that Cl, Br, and I is substantially not contained.

Halogen elements such as Cl, Br, and I are components that shift the absorption edge on the short-wavelength side toward shorter wavelengths, but deteriorate the water resistance of the glass. In addition, a melting vessel made of quartz glass or the like may be eroded during production, or the production equipment may be corroded if molten glass or volatile substances leak out, and the productivity may decrease. By setting the total amount X within the above-described range, the deterioration of the water resistance of the glass can be suppressed, and the desired productivity can be obtained.

In the chalcogenide glass according to the second embodiment, the lower limit of the amount of Sb is preferably 0.0%, and more preferably 2.0%, 4.0%, 6.0%, 8.0%, 10.0%, 12.0%, 14.0%, 16.0%, 18.0%, 20.0%, 21.0%, 22.0%, 23.0%, 24.0%, 25.0%, 26.0%, 27.0%, 28.0%, 29.0%, 30.0%, 31.0%, 32.0%, 33.0%, 34.0%, 35.0%, 36.0%, 37.0%, 38.0%, 39.0%, and 40.0% in that order. The upper limit of the amount of Sb is preferably 84.0%, and more preferably 82.0%, 80.0%, 78.0%, 76.0%, 75.0%, 74.0%, 73.0%, 72.0%, 71.0%, 70.0%, 69.0%, 68.0%, 67.0%, 66.0%, 65.0%, 64.0%, 63.0%, 62.0%, and 61.0% in that order.

Sb is a network-forming component of the glass. From the viewpoint of improving the thermal stability of the glass, it is preferable that the amount of Sb is set within the above-described range. Meanwhile, if the amount of Sb is too low, the thermal stability of the glass may decrease; in addition, the glass may not be molded.

In the chalcogenide glass according to the second embodiment, the amounts of glass components other than those described above can be the same as those in the first embodiment described above.

In the chalcogenide glass according to the second embodiment, the glass properties can be the same as those in the first embodiment described above.

The manufacture of the chalcogenide glass and the manufacture of an optical element according to the second embodiment can also be carried out in the same manner as in the first embodiment described above.

### [Examples]

Hereinafter, the present invention will be described in further detail with reference to Examples. However, the present invention is not limited to aspects shown in Examples.

### (Example 1)

Glass samples having glass compositions shown in Table 1 were produced according to the following procedure, and various evaluations were performed thereon. Incidentally, in all the glass samples, the amount of Cl, Br, and I was 0.00% by mass. In addition, in all the glass samples, the amount of Ge was 0.00% by mass. Furthermore, in Comparative Example 1, the glass sample was produced such that the amount of Na, K, Rb, and Cs was 0.00% by mass.

### [Manufacture of glass]

Quartz ampoules were prepared, and the interiors of the quartz ampoules were washed with purified water. A rotary vacuum pump was operated to create a vacuum, and the quartz ampoules were heated under vacuum using a burner to evaporate moisture. Raw materials were mixed so as to obtain the glass compositions shown in Table 1 and were placed inside the respective quartz ampoules, the interiors of the ampoules were sufficiently evacuated using the rotary vacuum pump, and then the ampoules were sealed using an H₂-O₂ burner. The sealed quartz ampoules were heated up to 950°C at a heating rate of 20°C/hour and then were held at the that temperature for 8 hours. The contents were left to cool to room temperature and were vitrified to obtain a glass sample. In addition, glass samples were obtained by charging a predetermined amount of raw materials into crucibles made of carbon so as to obtain the glass compositions shown in Table 1, and melting the raw materials by heating in an inert gas atmosphere containing sulfur gas. The melting temperature was set to 500 to 1200°C, and the melting time was set to 1 to 12 hours. The equivalent glass was obtained when manufactured by melting in the quartz ampoules and when manufactured by heating in the inert gas atmosphere containing sulfur gas.

### [Optical transmittance]

In order to evaluate the transmittance for visible light and infrared light, the wavelength of maximum transmittance and the wavelength of maximum transmittance were measured. "The shortest transmission wavelength" was defined as the wavelength at which the transmittance reached half of the maximum transmittance, as measured for a glass sample having a thickness of 1.5 mm using an ultraviolet-visible-near infrared spectrophotometer (Shimadzu Corporation, UV-3600i Plus, measurement wavelength range: 350 to 2500 nm). "The longest transmission wavelength" was defined as the wavelength at which the transmittance reached half of the maximum transmittance, as measured for a glass sample having a thickness of 1.5 mm using a Fourier transform infrared spectrophotometer (Shimadzu Corporation, IRTracer-100, measurement wavelength range: 2 to 16 µm). Incidentally, as described in this specification, the "maximum transmittance" means the transmittance at the wavelength at which the transmittance is its maximum, and is also referred to as the peak transmittance.

### [Glass transition temperature Tg and crystallization peak temperature Tc]

The glass transition temperature Tg and the crystallization peak temperature Tc were measured using a differential scanning calorimeter (DSC8271), which was manufactured by Rigaku Corporation, by heating up to 500°C at a nitrogen flow rate of 50 mL/min and a heating rate of 10°C/min.

The difference [Tc - Tg] between the crystallization peak temperature Tc and the glass transition temperature Tg was calculated to confirm the thermal stability. Incidentally, glass samples with no crystallization was observed and which did not exhibit the crystallization peak temperature Tc, even when heated up to 500°C, were evaluated as having superior thermal stability.

### [Liquidus temperature LT]

When a glass sample was heated up to 500°C at a heating rate of 10°C/min in a nitrogen atmosphere using a differential scanning calorimeter, while flowing nitrogen at a flow rate of 50 mL/min, the endpoint of an endothermic peak that appeared when crystals formed in the glass during the heating process melted in a temperature range higher than the glass transition temperature Tg or the crystallization peak temperature Tc was defined as the liquidus temperature LT. The liquidus temperature LT was determined as the temperature at the intersection of the tangent to the high temperature side of the endothermic peak and a baseline.

### [Water resistance]

The glass samples were processed to a thickness of 1.5 mm and were immersed in a sufficient amount of water at room temperature for 1 hour. The transmittance of light in a wavelength range of 2 to 16 µm was measured for the glass samples before and after immersion in water using a Fourier transform infrared spectrophotometer (Shimadzu Corporation, IRTracer-100). When the maximum transmittance did not decrease by 10% or more before and after immersion in water, the water resistance was evaluated as good. It was confirmed that all the glass samples had good water resistance.

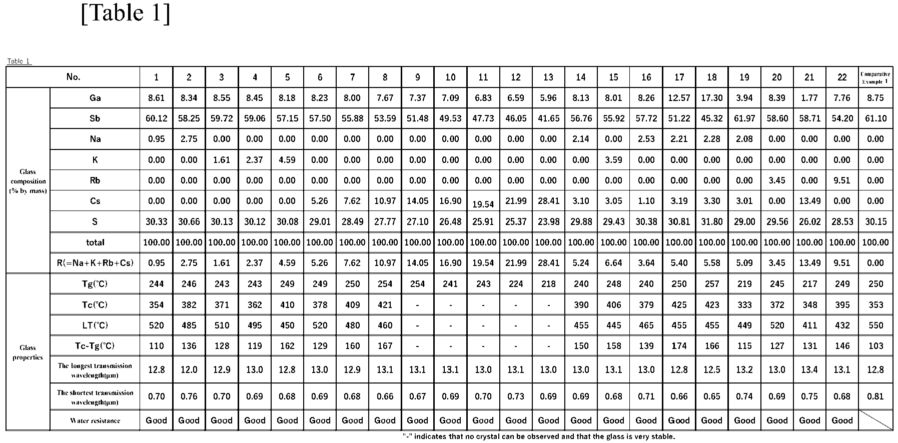

### (Example 2)

An aspherical lens, a lens array, and a microlens array were produced by precision glass molding the glass sample, which was produced in Example 14, at 300°C in a nitrogen atmosphere. The glass sample had superior thermal stability and superior processability in precision glass molding, and good aspherical lenses, lens arrays, and microlens arrays were obtained.

The embodiments disclosed herein should be considered as illustrative in all respects and not restrictive. The scope of the present invention is defined by the claims rather than the above description, and is intended to include all modifications within the equivalent concept and scope of the claims.

For example, the chalcogenide glass according to one aspect of the present invention can be produced by adjusting the compositions described in the specification with respect to the glass compositions that are illustrated above.

In addition, two or more of the items illustrated or described as preferred ranges in the specification can, of course, be arbitrarily combined.

## Claims

1. A chalcogenide glass comprising:
Ga in an amount of 2.0 to 40.0% by mass;
Sb in an amount of 20.0 to 75.0% by mass;
S in an amount of 15.0 to 40.0% by mass;
Na, K, Rb, and Cs in a total amount R [Na + K + Rb + Cs] of 0.05% by mass or more; and
Cl, Br, and I of in a total amount X [Cl + Br + I] of 0.01% by mass or less.

2. A chalcogenide glass comprising:
Ga in an amount of 0.5 to 30.0% by mass;
Ge in an amount of 5.0% by mass or less;
S in an amount of 15.0 to 40.0% by mass;
Na, K, Rb, and Cs in a total amount R [Na + K + Rb + Cs] of 0.05% by mass or more; and
Cl, Br, and I of in a total amount X [Cl + Br + I] of 0.01% by mass or less.

3. An optical element comprising the chalcogenide glass according to claim 1 or 2.
